# EUROPEAN PATENT SPECIFICATION

(11) **EP 1 594 685 B1**
(45) Date of publication and mention of the grant of the patent: **20.06.2007**
(21) Application number: 04701386.7
(22) Date of filing: 12.01.2004
(51) Int. Cl.: B31D 5/00

(54) **MANUFACTURE OF AIR BAGS**
AIRBAGHERSTELLUNG
FABRICATION DE COUSSINETS PNEUMATIQUES

(30) Priority: 14.01.2003 GB 0300747; 16.05.2003 GB 0311246
(43) Date of publication of application: 16.11.2005
(73) Proprietor: Easypack Limited, Stevenage, Herts SG1 2BD (GB)
(72) Inventor: KEMPSTER, Roger Brian, Easypack Limited Unit 1, Stevenage, Herts, SG1 2BD (GB); DAVEY, Trevor, John, Easypack Limited Unit 1, Stevenage, Herts, SG1 2BD (GB)
(74) Representative: Sherrard-Smith, Hugh
(86) International application number: PCT/GB2004/000053
(87) International publication number: WO 2004/062902

(56) References cited:
- EP-A- 0 404 484
- CH-A- 366 794
- US-A- 4 467 499
- US-A- 4 683 615
- US-A- 5 045 020
- US-A- 5 778 642

## Description

The present invention relates to air bag manufacturing apparatus, a method of manufacturing air bags and the use of a cartridge in an air bag manufacturing apparatus.

In a known machine for forming plastics bags with air in them such as described in our co-pending European application 02 251 571.2 published under number 1 245 491, a nozzle pierces and injects air into a tube of film. Whilst this provides very satisfactory bags there are some drawbacks. In particular, the penetration of the nozzle into the tube requires a considerable amount of machinery which is expensive to supply and requires regular maintenance. Furthermore, the length of each bag is not readily adjustable.

Other methods of forming air bags comprise having a sheet of plastics folded about its length to present a fold at one side and open edges at the other. The sheet is pre welded across its length at spaced locations that correspond to the length of the bag. Air is blown in from the side and the side is subsequently sealed to form the bag. This film is expensive. Furthermore, the sides of the bag do not always open satisfactorily thus producing bags with inconsistent air fillings. In addition, the length of each bag is predetermined by the partly presealed film.

CH 366794 relates to an apparatus and method in accordance with the preambles of appended claims 1 and 13 and discloses apparatus for forming plastic bags with air in them. The apparatus consists of a cassette comprising a drum having a tube rolled about it. A supportive layer is wound with the tube to separate each layer. One end of the tube is attached to an air supply unit integral with the drum. Consequently, air is blown through the wound tube. A second end of the tube is passed through a sealing station, which seals pockets of air within the tube.

It is an object of the present invention to attempt to overcome at least one of the above or other disadvantages.

According to one aspect of the present invention air bag manufacturing apparatus comprises a tube of film arranged to be fed to a sealing station which station, in use, is arranged to apply seals across the width of a tube to trap air in the tube between the two spaced seals, with air being arranged to be supplied to be trapped between two spaced seals through the tube, from an open end of the tube, characterised in that the tube is bunched up in the axial extent of the tube.

The tube may be supplied to the sealing station from a supply station.

The supply station may be arranged to maintain a passage through the tube. The supply station may include a hollow member such as a tubular member around which the tube is located. The air that is arranged to be trapped between two spaced seals may be arranged to pass through the interior of the hollow member or, alternatively or additionally, through the interior of the tube over the exposed interior wall of the tube, for instance by the tube having nothing in it along its bunched up length.

The tube may be located in a container of the supply station. The tube may be detached from the container around the sides of the tube or around the ends of the tube or both.

The container may include an outlet through which film is fed to the sealing station.

The tube of film is bunched up in the axial extent of the tube. Prior to any air bags being made from the tube, that bunching up may comprise the ratio of the length of bunched up tube to the length of the tube when stretched out being more than 1:2 or more than 1:10 or in the region of 1:100 or more than 1:100 or in the region of 1:200 or more than 1:200 or in the region of 1:300 or more than 1:300. The bunched up tube may be arranged to maintain an opening throughout its length such as by maintaining such an opening solely as a result of compression induced during bunching of the tube.

The supply station may be removably mounted on the apparatus. A different supply station can be used when a previous supply station is no longer required, for instance because the previous supply station is empty.

During mounting of the supply station, the supply station may be arranged to partially engage with the apparatus and move in at least one axial direction with respect to the elongate axis of the tube and preferably in two axial directions when so engaged, either or both of which axial directions of movement may be against a resilient bias or with a resilient bias with for instance, movement in one axial direction being against the resilient bias and movement in the other axial direction being with the resilient bias. The resilient bias may comprise a spring such as a compression spring.

The supply station may be arranged to be held in position by the apparatus when mounted thereon to prevent further movement of the supply station towards the sealing station. The supply station may be arranged to be at least partially supported at at least one end, for instance the end furthest away from the sealing station, by, for instance, a support member of the apparatus extending within the supply station, which may also extend along the supply station. Alternatively or additionally, the supply station may be arranged to be at least partially supported at one end, preferably the end nearest the sealing station, by a brush or an upper and lower brush. Alternatively or additionally, the supply station may be supported from beneath the station such as, for example, resting on one or more spaced supports.

The supply station may comprise an end stop for at least one end, and preferably both ends, which end stops are arranged to resist the passage of film over one or each stop without assistance. The or each end stop may comprise a flange such as a circular flange extending radially outwardly with respect to the longitudinal axis of the tube at that.end.

The tube of film may be arranged to pass over a spreader having a greater extent in the direction across the tube in the direction that a seal made by the sealing station is arranged to make than in a direction transverse thereto. The spreader may be hollow and may be arranged to have air passed through the spreader which air is the air that is arranged to be trapped between two spaced seals. Alternatively or additionally air may be arranged to flow over at least one and preferably two surfaces, which may be opposed surfaces, when air is being supplied to the tube.

The spreader may be located downstream of the supply station. The spreader may be fast with the supply station. The spreader may be detachably mounted on the supply station such as by means of a force fit or a bayonet fit with the supply station. Alternatively or additionally, the spreader may be loosely held within the film.

The apparatus may include drive means arranged to supply film to the sealing station. Alternatively or additionally, the film may be arranged to be manually drawn through the sealing station.

The apparatus may be arranged to impart a differential force on a tube upstream of the sealing station which is arranged to urge axially spaced portions of the tube apart from each other. The differential force may be arranged to be applied by a pair of members which may be spaced from each other. The downstream one of these pair of members may be arranged to drive the tube, for instance from opposed sides of the tube. The upstream member may also be arranged to exert a drive to the film with the speed of drive imparted to the tube by the upstream drive member being less than the speed of drive imparted by the downstream member. Slippage of the film may be arranged to occur between the upstream member and the downstream member. When either or both of the members are driven they may comprise rollers.

The sealing station may be arranged to effect a seal when the tube is stationary or when the tube is moving. The sealing station may be arranged to apply heat to effect a seal and then hold the tube at the sealing station, for instance for a predetermined period of time whilst the temperature induced by the heat decreases, before allowing the tube to advance.

The sealing station may include a seal actuator such as an electronically activated actuator arranged to cause the film to be moved against sealing means. The actuator may be arranged to hold the film against sealing means. The actuator may be arranged to cause the film to be held against the sealing means after the force effected by the actuator is no longer being applied such as by a linkage being caused to move over centre upon activation of the actuator. The film may be caused to be held against sealing means against a resilient bias. The sealing station may include a release actuator such as an electronically activated actuator arranged to release a hold on the film against sealing means. The release actuator may be arranged to move a linkage that is over centre back over the centre. Where a seal actuator and a release actuator are provided these may be arranged, upon actuation, to move in opposed directions which may be transverse or perpendicular to the direction of movement caused to seal or release the film from the sealing means. The seal actuator and the release actuator may be connected to a linkage such as a pivotal linkage which linkage may include a lost motion effect which lost motion effect may also include a pivot.

The sealing station may be manually actuatable or automatically actuatable or both. The sealing station may be arranged to form a pair of adjacent seals during each sealing operation. The sealing station may be arranged to effect a weakening of the tube between adjacent seals when effecting a sealing operation, for instance by exerting a series of perforations across the tube when effecting the seal.

In use, bags may be arranged to be pulled at a location downstream of the sealing station, for instance by being pulled manually or automatically for instance by a pair of rollers.

The frequency of the operation of the sealing station may be adjustable or, alternatively or additionally, the rate of feed of the tube past the sealing station may be adjustable.

The air that is arranged to be trapped between two spaced sides of the tube may be supplied by a fan which may, for instance, be supplied to the upstream end of the tube such as through an opening in a container of the film.

According to another aspect the present invention comprises a method as defined in claim 13.

The method may comprise replacing a supply of film with a different supply of film, for instance when the previous supply of film is empty or is no longer required. The method may comprise replacing a supply of film by supplying a container housing film and the method may comprise locating the container down onto an upwardly facing support or supports.

The method may comprise causing the film to pass over a spreader having a greater extent in the direction across the tube in the direction that a seal is made than in a direction transverse thereto. The method may comprise passing the film over the spreader when loading the machine with film or causing the film to repeatedly be drawn over the spreader during manufacture of the bags. The method may comprise passing air through or around or over the spreader with the air subsequently being trapped between two spaced seals.

The method may comprise attaching the spreader to a supply station prior to making the bags. Alternatively or additionally, the method may comprise supporting the spreader with the film.

The method may comprise straightening the length of film at a location downstream from where the film is bunched up, for instance by exerting a tension force on the film.

The method may comprise manually actuating the sealing station to cause a seal to be made or automatically actuating the sealing station to cause a seal to be made or both.

The method may comprise supporting the supply of film by a member that resists both a downwards and a moment force caused by the weight of the supply of the tube or, alternatively, supporting the supply of film without a moment force having to be exerted on the supply of film.

The method may comprise pulling bags off the machine from a location downstream of the sealing station. Alternatively or additionally, the method may comprise the air being supplied through the tube urging the film past the supply station which air may comprise the sole force urging the tube forwards.

The method may comprise varying the frequency of operation of the sealing station or varying the speed of supply of the film or both. The method may comprise automatically making bags of a first length from the supply of films and then adjusting the machine to make bags of a different length or to make bags having a different content of air or any combination thereof. The method may comprise varying the length of the bag by varying the length of film between seals such as by manually pulling the required length before effecting the seal.

The method may comprise varying the amount of air in a given length of bag, for instance by varying the direction that the tube leaves the sealing station or restricting the expansion of the walls of the tube downstream of the sealing station such as manually making that restriction or by varying the speed that the film passes the sealing station or any combination thereof.

The method may comprise a packer making a bag of a first length having a first volume of air, making a bag of the first length having a second volume of air, making a bag of a second length having a third volume of air which third volume may be the same as the first or second volumes or any combination thereof.

The method may comprise supplying air through the tube from a fan. The present invention also includes a method of making bags when using apparatus as herein referred to.

According to a further aspect the present invention comprises the use of a cartridge as defined in claim 16.

The degree of bunching of the film may be such that the ratio of the bunched length of the tube to the fully extended length of the tube may be greater than 1:2 or greater than 1:10 or in the region of 1:100 or more than 1:100 or in the region of 1:200 or more than 1:200 or in the region of 1:300 or more than 1:300.

The passageway may be open even when air is not passing through the film. The passage may be arranged to be open through the natural flexure of the bunched up film. The cartridge may include a container within which the film is located. The film may be detached from the container around the side of the film or around one or both ends or any combination thereof.

The cartridge may include an elongate member extending through the tube through which member air is arranged to flow. The elongate member may comprise a carrier.

The cartridge or carrier or container may include a stop at at least one end arranged to inhibit the passage of the tube off that end. The stop may be integral with the carrier. The stop may comprise a disc. Alternatively or additionally, the cartridge may be arranged to be supported from beneath without any moment having to be exerted on the cartridge to effect the support.

The carrier may comprise a hollow member such as a tubular member. The hollow member and the machine may cooperate with each other by means of a projection and recess with the cartridge being supported thereby on the machine. The hollow member may be arranged, in use, to receive a projection from a machine which may be arranged to at least partially extend into the cartridge and may extend along the cartridge. The projection may be arranged to restrict a bending moment exerted by the weight of the cartridge about the end region of the cartridge.

The cartridge may include an adaptor at one end. The adaptor may be arranged to be detachably mounted on the cartridge, for instance by a friction fit or by a bayonet fit. The adaptor may be hollow. The adaptor may include an outlet facing away from the cartridge having a greater extent in one direction, transverse to the longitudinal axis of the tube than an extent that is transverse to that direction which is also transverse to the elongate extent of the tube.

A method of bunching a supply of hollow film may comprise causing relative movement of a core and the hollow film such that part of the film surrounds the core and then causing the film to be reduced in its elongate length to cause more film to surround the core.

The method may comprise loading hollow film having a greater internal cross-sectional area than the exterior cross-section of the cartridge.

The method may comprise loading film onto a core with the length of film that is so loaded being more than 10 or more than 20 or more than 50 or in the region of or more than 100 times the length of the core.

The method may comprise locating the open end of the hollow film onto the core, for instance during the initial loading of the film. The method may comprise driving the film onto the core such as by a friction drive or, alternatively or additionally by a rotating member urging the film against the cartridge and along the cartridge which member may rotate about an axis transverse to or perpendicular to the elongate axis of the film.

The method may comprise driving the film onto the core. The drive may comprise a first drive causing film to move in a first direction along the cartridge and a second drive that moves the location at which the first drive acts in a second direction, opposed to the first direction. The first and second drives may act at the same time. The first drive may comprise rotating at least a first member, and preferably two opposed members which may be on opposed sides of the core.

The method may comprise removing the bunched up film from the core. The removed bunched up film may be used in a film cartridge as herein referred to or in a method of forming bags as herein referred to or in air bag manufacturing apparatus as herein referred to.

The packing cartridge may comprise a cartridge having a supply of hollow film bunched up along the elongate axis of the film located thereon, the film being of greater length than the cartridge when the film is not bunched up along the elongate axis of the film.

The film may be of greater cross-sectional area or circumference than the cross-sectional area or circumference of the cartridge.

The cartridge may be used in air bag manufacturing apparatus as herein referred to or used in a method of manufacturing air bags as herein referred to.

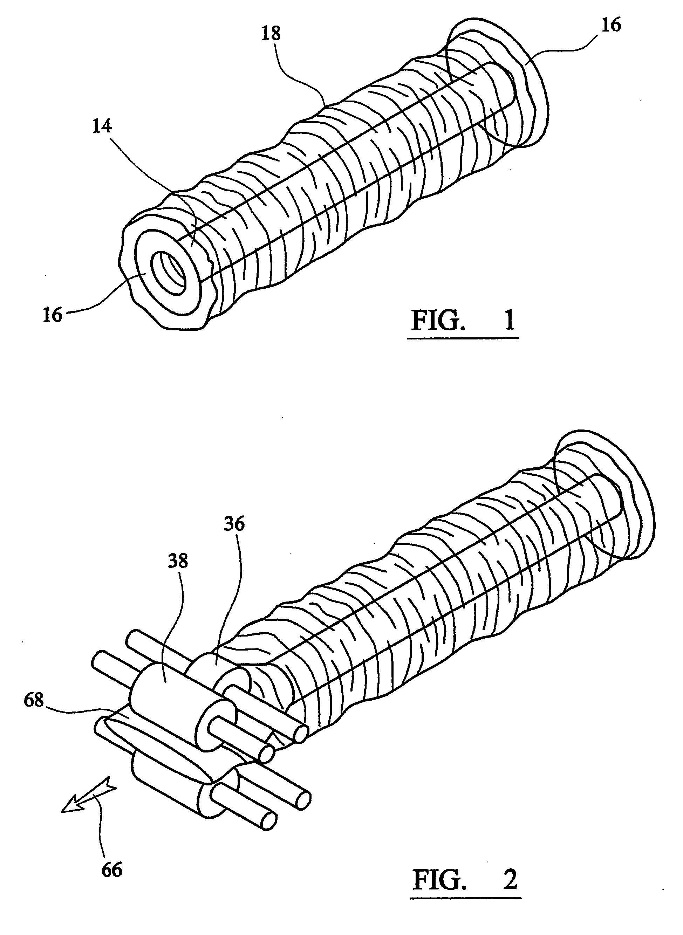

The present invention can be carried into practice in various ways but several embodiments will now be described, by way of example, and with reference to the accompanying drawings in which:-
Figure 1 is a perspective view of a film cartridge 10;
Figure 2 is a perspective view of the cartridge 10 in association with drive rollers;
Figure 3 is a schematic side view of the bag forming machine;
Figure 4 is a perspective view showing a line of bags 12;
Figure 5 is a front view of an alternative sealing station to which a wafter board may be fitted;
Figures 6, 7 and 8 are a side and two plan views of different parts of the sealing station shown in Figure 5;
Figure 9 is a schematic perspective view of the sealing region of the sealing station shown in Figures 5 to 8 and
Figures 10 and 11 are a schematic perspective view from one end and a perspective view of the other end of the cartridge used with Figures 5 to 9.

The cartridge 10 comprises a hollow cylinder 14 having enlarged end discs at either end. A tube of plastics film 18 is concertined or bunched up on the cylinder 14 with the film being retained on the cartridge by the end discs 16. With a full cartridge of 1m in length, 200m of film may be concertined on the cartridge.

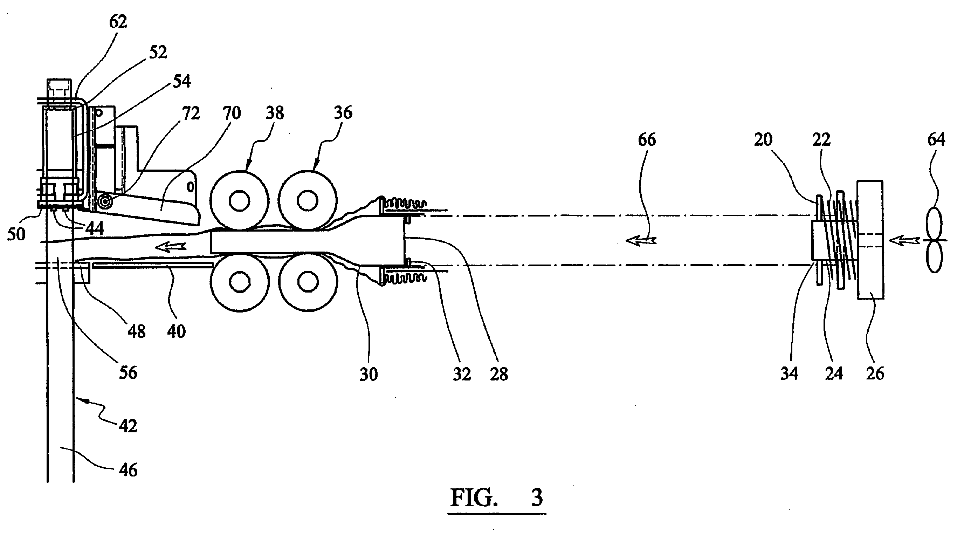

The cartridge is loaded onto the machine by the disc 16 at the rearward end of the cartridge pushing a washer 20 against the reaction of a spring 22 to the right, when viewed in Figure 3. The washer is mounted on a tube 24 over which the interior of the end of the cylinder 14 slides. With the washer 20 pushed back to be adjacent to a fixed back plate 26 the forward disc 16 can be moved past the end 28 of an adaptor 30 until the round end of the adaptor is aligned with the forward end of the cylinder 14. The force exerted by the spring 22 then urges the cylinder over the round end of the adapter. Forwards movement of the cartridge is restricted by abutment of an internal flange 32 of the cylinder, axially spaced from the end of the cartridge, with the axially facing end 28 of the adaptor.

The washer 20 is retained on the tube 24, when no cartridge is present, by engaging a small outwardly extending rim 34 at the end of the tube.

Removal of a cartridge is a reversal of the above described sequences. Loading and/or unloading may be effected automatically.

Any suitable alternative means of attaching or detaching the cartridge may be provided. For instance, the forward end of the cartridge could be slid over the end of the adaptor, which may be a force fit or bayonet fit, with the rear end being dropped into or clicked into or retained in a suitable formation.

When a cartridge is in position, the forward end of the film is gathered and pulled over the disc 16, to the right when viewed in Figure 3. The film is passed over the adaptor, past a first pair of rollers 36 and then a second pair of rollers 38. The rollers 36 or 38 or both could be lifted clear, either at the top or bottom or both to assist in passing the film over the adaptor. Alternatively or additionally at least one roller in one pair or at least one roller from each pair could be driven to assist in the passing of the film over the adaptor.

The film then passes over a work surface 40 and past a sealing station 42. If desired, drive means could be provided downstream of the sealing station to assist in the passage of the film past the sealing station. Alternatively or additionally air being blown through the film may cause or assist in causing the passage of the film through the sealing station. Those drive means could comprise a pair of rotatable members that engage and urge the bags to the left when viewed in the drawings. Alternatively the drive means may comprise an operator urging or pulling the film to the left.

With the film so loaded, the sealing station can be activated.

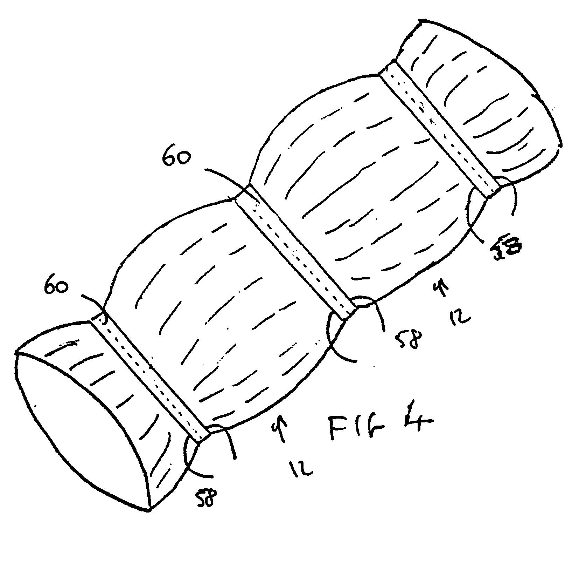

The sealing station comprises a pair of hot wires 44 that run across the width of the film. These are mounted on a pair of posts 46 mounted at either side of the machine such that the wires can move down towards an anvil 48 beneath the film. A plate 50 on which the wires are mounted is urged downwardly by a cam drive which (not shown) is located beneath the film and to one side of the machine. In a revolution of the cam a rod connected to the cam provides a positive drive to bring a plate 52, also mounted on the posts 46, down towards the anvil by a greater distance than the distance shown between the plate 50 and the anvil 48 and then back again. The film at the sealing station can be stationary or moving when the seal is made. A compression spring 54 collapses towards the bottom of that movement to bias the hot wires against the anvil. In the lower position the hot wires form two spaced seals 58 across the film. At the same time a series of spikes 56 on the anvil form a series of perforations 60 across the film between the seals 58, as shown in Figure 4.

The plate 50 is caused to return up, away from the anvil by brackets 62 at each side that rest on top of the plate 62 and are connected to the plate 50 at their lower end. Thus, during compression of the spring the upper end of the bracket is able to remain stationary during the lower part of the downwards movement of the plate 52 but is caused to raise the plate 50 when the plate 52 engages the upper end of the brackets 62 again.

A fan 64 mounted to the right of the cartridge blows air down, through the cartridge in the direction shown by arrows 66. The air travels through the circular right hand end of the hollow adaptor and then through the lozenge 68 shaped part of the adaptor. The lozenge 68 also assists in spreading the film out.

In one embodiment (not shown) the cartridge is retained at its left hand end, for instance by the disc 16 being held in a semi-circular recess such that it can not move to the left. Prior to that fitting, the nozzle can be made fast with the left hand end of the nozzle within the cylinder of the cartridge with a bayonet fitting. This will assist in preventing the cartridge from being urged into and jamming between the rollers 36 and 38. The semi-circular recess may be able to be moved against a spring to allow the nozzle to be moved to the right and then sprung back towards the rollers. The semi-circular recess may abut against a stop to prevent the nozzle from being able to be jammed between the rollers. The tube 24 may extend further into the cartridge than is shown in the drawings to provide extra support such as the sole support for the cartridge. Alternatively, a tube may extend all of the way through the cartridge and the adapter may be attached to or be connected to or integral with the tube.

At least one and preferably both of each of the rollers 36 and 38 may be driven. The rollers 36 are arranged to drive the film at a slightly slower speed than the rollers 38. This ensures that the film comes off the cartridge with a small degree of tension in the extent between the rollers. Some slippage of the film between the rollers and the adaptor may occur to allow for this differential drive.

In an alternative embodiment (not shown), the forward end of the cartridge is supported on a brush or between an upper and lower brush and the rollers 36 and 38 may be omitted. The brushes may provide or assist in providing support for the end of the cassette. The brushes may also provide a check on the ease at which the film can leave the cartridge. In this embodiment the film may be pulled through the sealing station by an operator located downstream of the sealing station. The operator can pull as much or as little film past the sealing station before effecting the next seal. In addition, by altering the angle of the extent of the plastic from the sealing station the volume of air in the bag can be varied. For instance, if the film comes straight out of the station, in line with the axis of the tube, a relatively full bag can be made. If that angle to the axis is increased by bending the bag about to be formed then a less full bag is made. Other means may be used to vary the amount of air in a given length of bag such as by an operator squeezing the about to be formed bag.

With a seal being present at the end of the film, air from the fan tends to force the walls of the tube of film apart upstream of the seal and in the region of the work table 40 and downstream of the supply station, as the film is advanced.

As the wires are brought down again, to form a further pair of seals, air is trapped in the bag between the newly formed seal and the preceding seal. In place of the hot wires, the seal may be effected by applying an impulse of heat, for instance to wires, and allowing the wires to cool whilst the film is trapped between the wires prior to advancing the film.

A wafter board 70, which may be optional, is fast with the plate 50. The board 70 extends across the width of the film and extends downwardly from a pivot mounting 72 towards the adaptor. Consequently, as the plate 50 moves down, the board engage the film partially at an upstream position and then increasing downstream as it is caused to move about the pivot (against the action of a spring, not shown) to waft air between the tube forwardly, past the sealing station, to ensure that the bag formed by the seal is or can if desired adequately filled.

It will be appreciated that the speed of the rollers can be adjusted to control the rate of supply of the film to the sealing station.

It will also be appreciated that the frequency of seals being applied by the sealing station can be altered.

Furthermore, the rate of supply of air can be altered, for instance by varying the speed of the fan.

Any one or more of the air supply, length of film feed (regardless of whether this is manual or automatic such as by the rollers) roller speed or frequency of sealing can be controlled automatically for instance by a control (not shown). Furthermore the control can alter any one or more of these factors to produce bags of a certain length for a predetermined number, and then bags of a different length or, alternatively or additionally, bags of the same length having a different amount of air or alternatively or additionally bags of different lengths having the same or a different amount of air.

In one mode, the operation of the sealing station may be effected manually, for instance by an operator operating a switch which may be foot operated, to cause seals to be effected by the sealing station.

It will be appreciated that, as the air is being supplied continuously from the air supply means, the space within the tube of film is continuously being filled with air and is not dependent upon a limited supply for each bag. It will also be appreciated that large bags can be provided which, for instance, could be caused to be partially full to enable a bag to be bent around a corner.

An operator will be able to pack a customised product such as by producing four tight small bags for the base of the product in a box, then four large but floppy bags for the lower corners which bags can be bent around the corners then, with the product being located in the box, two tight bags of intermediate length for each of the four sides, then four large but floppy bags for the upper four corners and finally two medium sized, relatively loosely filled bags for the top. The bags can be sequentially produced by a single operator as the product is being packed.

An operator may also be able to pack products on a work bench with bags being supplied from the machine which is located to the side or beneath the work bench. For instance, the bags could come up through an opening in the bench.

In order to load a cartridge with the tubular film, this could be done automatically. For instance, an end of a tube of film could be pulled over the cartridge to one end. Then driven rollers at that end region could rotate to drive more film onto the cartridge towards that one end. As the film bunches up onto the cartridge the rollers could be advanced from that one end towards the other end for instance by the axes of the rollers being advanced by a caterpillar track mounting arrangement for those rollers. For a 1 m length of cartridge, 50 or 100 m of film may be loaded on to it.

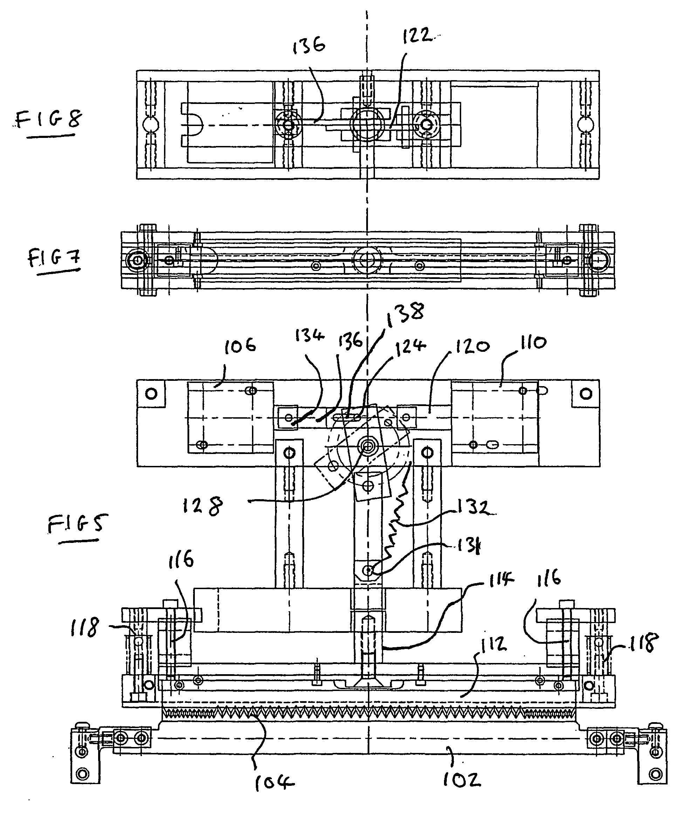

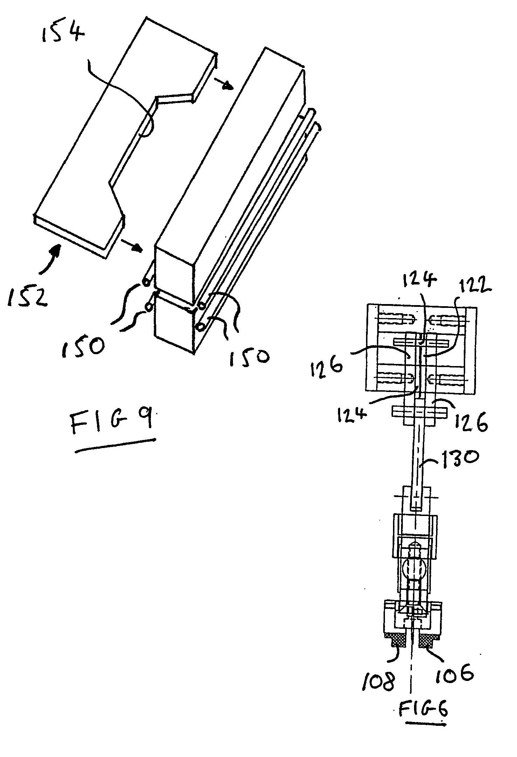

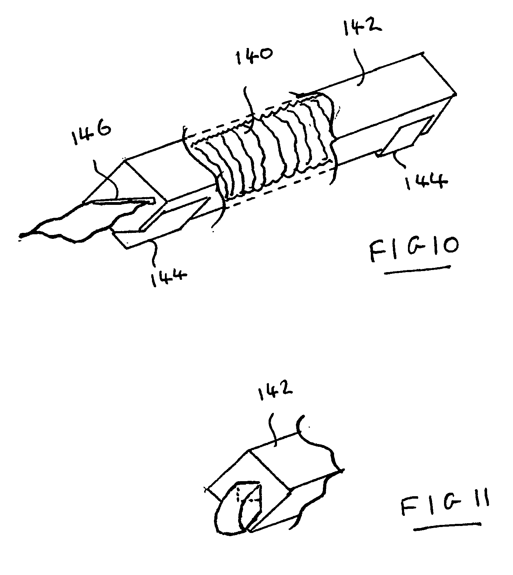

The embodiment shown in Figures 5 to 11 will now be described. It will be appreciated that the sealing station may be used in the embodiment previously described as may the cartridge. Furthermore, the embodiment may be operated in the manner as previously described.

The sealing station 100 shown in Figures 5 to 8 includes a pair of spaced parallel wires that can be heated to form the spaced seals. The wires are mounted on a static cross member 102. A slot (not shown) is provided between the wires into which the serrated blade 104 passes when piercing the film to weaken the strip to allow detachment of the bags.

The seals are applied by actuating a first solenoid 106 and simultaneously heating the wires. This causes spaced pads 108 to move down and hold the film against the wires. At the same time that the wires are heated they are almost immediately turned off with the film remaining held in place. After a predetermined time (during which the sealing temperature cools down to provide a good quality seal) a second solenoid 110 is actuated to lift the pads 108 and to permit the film to be pulled forwards. Each solenoid is powered for an instant and yet still the pressure of the pads is maintained for the required period. The action effected by the solenoids will now be described.

The pads 108 are mounted on a cross member 112 which is constrained to move in a vertical direction only. A vertically reciprocatable driven member 114 is connected to the member 112 with guide rods 116 at either end with the members 112 and 114 being biased away from each other by compression springs 118. In the position shown in Figure 5, the member 114 has been pushed down to compress the springs 118 to hold the film against the wires.

To release the pressure of the pads and to move the pads upwardly the second solenoid is actuated to drive its plunger 120 to the right when viewed in the figure. The plunger 120 is pivotally connected to a plate 122. The other end of the plate 122 has a pin 124 extending therethrough which pin also extends through circular openings in spaced plates 126. The plates 126 are constrained to rotate about a fixed pivot 128. The lower end of the plates 126 are pivotally connected to a link 130 which is connected, at the other end, to the member 114 by a pivot 131. A spring 132 extends from the pivot 130 upwardly to urge the pivot 131 in that direction. In the position shown in solid lines, before the solenoid 110 is activated, the spring 132 holds the link 122 in an over centre position in which the lower pivot of the links 126 is below and slightly to the right of the fixed pivot 128, when viewed in Figure 5. Although Figure 5 does not shown this feature, nevertheless the pivot in practice will be slightly to the right. This is known as an over centre position.

When the solenoid 110 is activated the plates 126 rotate in a clockwise direction. After only a small amount of movement the plates pass back over the centre with the spring 132 then urging the pivot 130 and therefore the member 114 upwardly, first to relieve the pressure of the pads on the film and then to raise the pads clear of the film, when the springs 118 have urged the members 114 and 132 apart to their permitted maximum. In this position, the plate 122 is in the position shown in dashed lines in Figure 5.

To apply the seal the solenoid 106 is activated to move its plunger 134 to the left, when viewing Figure 5. The plunger is pivotally connected to a plate 136 with the pin 124 being pivotally connected to the plate 136 at the other end. Consequently this movement urges the plates 126 in an anticlockwise direction to move the plates 126 to the position shown in solid lines in Figure 5. This first of all moves the pads down to contact the film and then urge the pads more firmly against the film as the springs 118 are caused to be compressed.

Whilst the plate 126 is able to rotate only in relation to the pin 128, the pin 124 is able to move both rotationally and translationally with respect to the plate 122 by sliding in a slot 138 of that plate. Consequently, in the position shown in solid lines, the pin is to the right of that slot and all movement of the solenoid 110 is instantly applied to the plate 122. Once the plunger 128 has pulled the plate 122, such that the pin 124 is at the left hand end of the slot, the solenoid 110 imparts sufficient force to "unlatch" the over centre action of the plates 126. This allows the spring 132 to return the member 114 and connected parts upwards.

As each solenoid only effect a "short" sharp movement and are thereafter turned off, the solenoids can be relatively low in power consumption and relatively inexpensive.

As shown in Figures 10 and 11, the film 140 is bunched up as previously described. In this arrangement though there is nothing in the interior of the film. The compacted film is largely self supporting and is unattached within an elongate cardboard container 142. The container 142 may be square in cross section and is arranged to be mounted with one corner above another on one or more V-supports 144 which may be spaced from each other. The front end of the container 142 includes a horizontal slit 146 extending almost from one corner to the other of the container. The other end of the container includes an opening. In use, the container is simply dropped onto the supports 144 with the slit facing the sealing station and the other end of the container being against a plate having an opening through which air may be blown into the container and through the tube. In this embodiment, the film may be arranged to be manually pulled from beyond the sealing station without there necessarily being any drive rollers.

The air that is blown through the tube passes the sealing station to inflate the tube between the sealing station and the seal on the tube downstream of the sealing station. Any length of bag can be formed simply by pulling the required length of tube past the sealing station before effecting the next seal. Similarly the bags can have any desired volume of air such as by pulling the tube slowly past the sealing station or keeping the tube stationary after pulling, to allow more air per unit cross section, or pulling the tube quickly, or immediately effecting the seal after pulling to allow less air in. Alternatively or additionally the tube can be pulled upwardly or downwardly out of the sealing station to allow less air in.

A pair of rotatable pinch rollers 150 shown in Figure 9 may be provided just before the sealing station or just after or both. These may help the tube to remain spread out across the width of the sealing station. The may also prevent an operator from being able to inadvertently get their fingers caught in the sealing station. Furthermore, the upstream rollers 150 are abutted by a spreader plate 152 around which the film is spread to prevent the plate 152 from reaching the sealing station. The plate 152 has a recessed front edge 154 which allows the air to flow past that plate within the tube. Any or all of the rollers may be castillated along their length to provide a varying outside diameter along the axial length whereby the air may more easily flow through to assist in the inflation of the tube.

## Claims

1. Airbag manufacturing apparatus comprising a tube (18) of film arranged to be fed to a sealing station (42) which station, in use, is arranged to apply seals (58) across the width of the tube to trap air in the tube between the two spaced seals, with air being arranged to be supplied to be trapped between two spaced seals through the tube, from an open end of the tube, **characterised in that** the tube is bunched up in the axial extent of the tube.

2. Apparatus as claimed in claim 1 in which the tube (18) is arranged to be supplied to the sealing station (42) from a supply station with the supply station being arranged to maintain a passage through the tube.

3. Apparatus as claimed in any preceding claim in which the air that is arranged to be trapped between the two spaced seals is arranged to pass through the interior wall of the tube with the tube having nothing in it along its bunched up length.

4. Apparatus as claimed in claim 2 or 3 in which the supply station includes a hollow member (14) around which the tube is located.

5. Apparatus as claimed in claim 4 in which air that is arranged to be trapped between the two spaced seals is arranged to pass through the interior of the hollow member.

6. Apparatus as claimed in any preceding claim in which the air that is arranged to be trapped between the two spaced seals is arranged to pass through the interior of the tube over the exposed interior wall of the tube.

7. Apparatus as claimed in any preceding claim in which the bunched up tube is arranged to maintain an opening throughout its length by maintaining such an opening solely as a result of compression induced during bunching of the tube.

8. Apparatus as claimed in claim 2 and any preceding claim when dependent on claim 2 in which the supply station is removably mounted on the apparatus.

9. Apparatus as claimed in any preceding claim in which the tube of the film is arranged to pass over a spreader (30) having a greater extent in the direction across the tube in the direction that a seal is arranged to be made by the sealing station (42) than in a direction transverse thereto.

10. Apparatus as claimed in any preceding claim in which the frequency of the operation of the sealing (42) station is adjustable.

11. Apparatus as claimed in any preceding claim in which the rate of feed of the tube past the sealing station (42) is adjustable.

12. Apparatus as claimed in any preceding claim in which the air that is arranged to be trapped between two spaced seals of the tube is supplied by a fan (64).

13. A method of forming bags (12) containing air comprising supplying air to a tube (18) from which the bags are formed from one end of the tube, through the tube, and past a sealing station (42) and effecting a seal (58) across the tube by the sealing station, **characterised in that** the method further comprises passing air through the tube with the tube having been bunched up in the axial extent of the tube.

14. A method as claimed in claim 13 comprising passing the tube over a spreader (30) when loading the machine with the tube and supporting the spreader with the tube.

15. A method as claimed in either of claims 13 or 14 comprising varying the amount of air in a given length of bag.

16. Use of a cartridge including a tube of heat sealable film bunched up in the axial extent of the tube in an air bag manufacturing apparatus according to any of claims 1 to 12.

## Patentansprüche

1. Eine Vorrichtung zur Herstellung von Lufttaschen mit einem Schlauch (18) aus Folie, welcher angeordnet ist, einer Siegelstation (42) zugeführt zu werden, wobei die Station in Betrieb angeordnet ist, um Siegel (58) über die Breite des Schlauches anzubringen, um zwischen zwei voneinander beabstandeten Siegeln Luft im Schlauch einzuschließen, wobei die Luft zum Einschluss zwischen zwei beabstandeten Siegeln durch den Schlauch von einem offenen Ende des Schlauches zugeführt werden kann, **dadurch gekennzeichnet, dass** der Schlauch in der axialen Richtung des Schlauches gerafft ist.

2. Vorrichtung nach Anspruch 1, wobei der Schlauch (18) angeordnet ist, um von einer Zuführstation der Siegelstation (42) zugeführt zu werden, wobei die Zuführstation angeordnet ist, um einen Durchlass durch den Schlauch aufrechtzuerhalten.

3. Vorrichtung nach einem der vorhergehenden Ansprüche, wobei die Luft, welche zwischen zwei voneinander beabstandeten Siegeln eingeschlossen werden kann, entlang der inneren Wand des Schlauches passieren kann, wobei der Schlauch entlang seiner gerafften Länge hohl ist.

4. Vorrichtung nach Anspruch 2 oder 3, wobei die Zuführstation einen hohlen Bauteil (14) aufweist, um den herum der Schlauch angebracht ist.

5. Vorrichtung nach Anspruch 4, wobei die Luft, welche zwischen zwei beabstandeten Siegeln eingeschlossen werden kann, durch das Innere des hohlen Bauteils dringen kann.

6. Vorrichtung nach einem der vorhergehenden Ansprüche, wobei die Luft, welche zwischen den voneinander beabstandeten Siegeln eingeschlossen werden kann, durch das Innere des Schlauches über die exponierte innere Wand des Schlauches dringen kann.

7. Vorrichtung nach einem der vorhergehenden Ansprüche, wobei der geraffte Schlauch eine Öffnung über seine Länge freihalten kann, wobei eine solche Öffnung allein als Resultat der Kompression aufrechterhalten wird, welche während des Raffens des Schlauches ausgeübt wird.

8. Vorrichtung nach Anspruch 2 und jedem vorhergehenden Anspruch, wenn von Anspruch 2 abhängig, wobei die Zuführstation abnehmbar auf der Vorrichtung montiert ist.

9. Vorrichtung nach einem der vorhergehenden Ansprüche, wobei der Schlauch aus Folie über einen Spreizer (30) läuft, welcher ein größeres Ausmaß in der Richtung quer zum Schlauch hat, in welcher Richtung ein Siegel von der Siegelstation (42) angebracht werden kann, als in der dazu quer verlaufenden Richtung.

10. Vorrichtung nach einem der vorhergehenden Ansprüche, wobei die Takt-Frequenz der Siegelstation (42) einstellbar ist.

11. Vorrichtung nach einem der vorhergehenden Ansprüche, wobei die Zuführrate des Schlauches zur Siegelstation (42) einstellbar ist.

12. Vorrichtung nach einem der vorhergehenden Ansprüche, wobei die Luft, welche zwischen zwei voneinander beabstandeten Siegeln des Schlauches eingeschlossen werden kann, von einem Gebläse (64) zugeführt wird.

13. Ein Verfahren zur Formung von Taschen (12), welche Luft enthalten, welches das Zuführen von Luft zu einem Schlauch (18), aus welchem die Taschen von einem Ende des Schlauches aus gebildet werden, durch den Schlauch und durch eine Siegelstation (42) und das Herstellen eines Siegels (58) über den Schlauch durch die Siegelstation umfasst, **dadurch gekennzeichnet, dass** das Verfahren weiters umfasst, dass Luft durch den Schlauch dringt, wobei der Schlauch in der axialen Erstreckung des Schlauches gerafft wurde.

14. Ein Verfahren nach Anspruch 13, welches das Laufen des Schlauches über einen Spreizer (30) und das Versorgen des Spreizers mit dem Schlauch umfasst, wenn die Maschine mit Schlauch versorgt wird.

15. Ein Verfahren nach einem der Ansprüche 13 oder 14, wobei die Menge von Luft in einer gegebenen Länge von Taschen variiert wird.

16. Verwendung einer Patrone, welche einen Schlauch von hitzeversiegelbarer Folie, welche in der axialen Erstreckung des Schlauches gerafft ist, in einer Vorrichtung zur Herstellung von Luftpolstern nach einem der Ansprüche 1 bis 12.

## Revendications

1. Dispositif pour la fabrication de poches (ou coussins) d'air comprenant un tube (18) de film agencé pour être alimenté dans un poste de soudage (42), lequel poste est, en utilisation, agencé pour appliquer des soudures (58) sur la largeur du tube afin d'emprisonner de l'air dans le tube entre les deux soudures espacées, l'air étant prévu pour être alimenté dans le tube de manière à être emprisonné entre deux soudures espacées, depuis une extrémité ouverte du tube, ***caractérisé en ce que*** le tube est retroussé sur l'étendue axiale du tube.

2. Dispositif selon la revendication 1 dans lequel le tube (18) est agencé pour être fourni au poste de soudage (42) depuis un poste d'alimentation, le poste d'alimentation étant agencé pour maintenir un passage à travers le tube.

3. Dispositif selon l'une quelconque des revendications précédentes, dans lequel l'air qui est prévu pour être emprisonné entre les deux soudures espacées est prévu pour traverser la paroi intérieure du tube, rien ne se trouvant à l'intérieur du tube dans sa longueur retroussée.

4. Dispositif selon la revendication 2 ou 3, dans lequel le poste d'alimentation comprend un élément creux (14) autour duquel est placé le tube.

5. Dispositif selon la revendication 4, dans lequel l'air qui est prévu pour être emprisonné entre les deux soudures espacées est prévu pour circuler à l'intérieur de l'élément creux.

6. Dispositif selon l'une quelconque des revendications précédentes, dans lequel l'air qui est prévu pour être emprisonné entre les deux soudures espacées est prévu pour circuler à l'intérieur du tube sur la paroi intérieure exposée du tube.

7. Dispositif selon l'une quelconque des revendications précédentes, dans lequel le tube retroussé est prévu pour maintenir une ouverture sur toute sa longueur en maintenant cette ouverture uniquement en résultat d'une compression induite pendant le retroussage du tube.

8. Dispositif selon la revendication 2 et selon l'une quelconque des revendications précédentes lorsqu'elles sont dépendantes de la revendication 2, dans lequel le poste d'alimentation est monté de manière amovible sur le dispositif.

9. Dispositif selon l'une quelconque des revendications précédentes, dans lequel le tube du film est prévu pour passer sur un organe déplisseur (30) ayant une plus grande extension dans la direction en travers du tube dans la direction où il est prévu de faire réaliser une soudure par le poste de soudage (42) que dans une direction transversale à celui-ci.

10. Dispositif selon l'une quelconque des revendications précédentes, dans lequel la fréquence d'opération du poste de soudage (42) est réglable.

11. Dispositif selon l'une quelconque des revendications précédentes, dans lequel la vitesse d'alimentation du tube au-delà du poste de soudage (42) est réglable.

12. Dispositif selon l'une quelconque des revendications précédentes, dans lequel l'air qui est prévu pour être emprisonné entre deux soudures espacées du tube est fourni par un ventilateur (64).

13. Procédé de formage de poches (ou coussins) (12) contenant de l'air, comprenant l'alimentation en air d'un tube (18) à partir duquel les poches sont formées à partir d'une extrémité du tube, alimentation à travers le tube, et au-delà d'un poste de soudage (42), et en réalisant une soudure (58) transversalement au tube avec le poste de soudure, ***caractérisé en ce* que** le procédé comprend en plus le passage d'air dans le tube, le tube ayant été retroussé sur l'étendue axiale du tube.

14. Procédé selon la revendication 13, comprenant le passage du tube sur un organe déplisseur (30) lorsqu'on charge la machine avec le tube et le support de l'organe déplisseur avec le tube.

15. Procédé selon l'une ou l'autre des revendications 13 ou 14, comprenant la variation de la quantité d'air dans une longueur donnée de la poche.

16. Utilisation d'une cartouche comprenant un tube de film thermosoudable retroussé sur l'étendue axiale du tube dans un dispositif de fabrication de poches (ou coussins) d'air selon l'une quelconque des revendications 1 à 12.
